# EUROPÄISCHE PATENTSCHRIFT

(11) **EP 1 029 758 B1**
(45) Veröffentlichungstag und Bekanntmachung des Hinweises auf die Patenterteilung: **12.01.2005**
(21) Anmeldenummer: 99121122.8
(22) Anmeldetag: 22.10.1999
(51) Int. Cl.: B60S 1/04, B60S 1/28

(54) **Wischanlage**
Wiper device
Dispositif d'essuie-glace

(30) Priorität: 19.02.1999 DE 19906934
(43) Veröffentlichungstag der Anmeldung: 23.08.2000
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- DE-A- 1 630 346
- DE-A- 3 644 428
- GB-A- 859 052
- US-A- 2 952 029

## Beschreibung

### Stand der Technik

Die Erfindung geht aus von einer Gegenlaufwischanlage nach dem Oberbegriff des Anspruchs 1. Eine solche Anlage ist in der DE-A-3 644 428 offenbart.

Wischeranlagen mit mehreren Scheibenwischern für Kraftfahrzeuge werden mit deren Wischerlager direkt oder indirekt über eine Platine an einer Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind.

Die Antriebswelle ist im Wischerlager gelagert, ragt aus der Karosserie und bewegt einen an ihrem freien Ende befestigten Wischarm mit einem Wischblatt über eine Windschutzscheibe. Der Wischarm besitzt ein mit der Antriebswelle drehfest verbundenes Befestigungsteil, das gelenkig über ein Kniegelenk mit einem Gelenkteil verbunden ist, an das sich starr eine Wischstange anschließt. In die Wischstange ist an einem hakenförmigen Ende ein Wischblatt eingehängt. Das Wischblatt weist in der Regel ein mehrgliedriges Tragbügelsystem auf mit an einem Hauptbügel angelenkten Zwischenbügeln, mit deren Enden Krallenbügel gelenkig verbunden sind. Die Krallenbügel halten an ihren Enden mit ihren Krallen eine Wischleiste an deren Kopfleiste. Das mehrgliedrige Tragbügelsystem und eine in der Kopfleiste der Wischleiste eingelegte Federschiene ermöglichen, daß sich die Wischleiste mit einem gleichmäßigen Auflagedruck einer gebogenen Windschutzscheibe beim Wischen anpaßt.

Während der Fahrt, wenn der Scheibenwischer nicht betätigt wird, befinden sich der Wischarm und das Wischblatt in einer windgeschützten Parkstellung, und zwar in einem sogenannten Haubenspalt zwischen einer Motorhaube und der Windschutzscheibe des Kraftfahrzeugs. Wird der Scheibenwischer betätigt, schwenkt er von der windgeschützten Parkposition aus über die Windschutzscheibe.

Bekannt sind grundsätzlich zwei verschiedene Arten von Wischanlagen, und zwar Gleichlaufwischanlagen und Gegenlaufwischanlagen. Bei einer Gleichlaufwischanlage ragt in der Regel eine erste Antriebswelle auf der Fahrerseite, im äußeren Bereich der Windschutzscheibe aus einer ersten Öffnung in der Kraftfahrzeugkarosserie und eine zweite Antriebswelle etwa im mittleren Bereich der Windschutzscheibe aus einer zweiten Öffnung in der Kraftfahrzeugkarosserie. Von den Antriebswellen werden Scheibenwischer mit einem Wischarm und einem Wischblatt aus einer unteren Parkstellung auf der Windschutzscheibe in gleicher Schwenkrichtung zu jeweils einer Umkehrlage und wieder zurück bewegt. Der Scheibenwischer für die Beifahrerseite schwenkt dabei meist knapp über die Mitte der Windschutzscheibe und der Scheibenwischer für die Fahrerseite bis an einen äußeren Rand der Windschutzscheibe.

Bei einer Gegenlaufwischanlage ragt jeweils im äußeren linken und rechten Bereich der Windschutzscheibe eine Antriebswelle aus einer Öffnung in der Kraftfahrzeugkarosserie. Auf den Antriebswellen ist jeweils ein Scheibenwischer mit einem Wischarm und einem Wischblatt befestigt. Die Scheibenwischer sind in einer Parkstellung im unteren Bereich der Windschutzscheibe waagerecht zur Mitte des Kraftfahrzeugs hin ausgerichtet. Die Wischblätter sind in der Parkstellung im mittleren, unteren Bereich der Windschutzscheibe übereinander angeordnet und werden von den Antriebswellen mit jeweils entgegengesetzter Schwenkrichtung aus der Parkstellung auf der Windschutzscheibe nach außen zu einer Umkehrlage und wieder zurück bewegt. Um mit einem Wischerantrieb entgegengesetzte Schwenkrichtungen zu erzeugen, ist bekannt, einen Wischarm über ein Umlenklager zu betätigen.

Weist das Kraftfahrzeug eine breite, niedrige Windschutzscheibe auf, müssen kurze Wischblätter verwendet werden und die Wischfeldgröße nimmt im Verhältnis zur Größe der Windschutzscheibe ab. Ferner nimmt bei einer Gleichlaufwischanlage bei Windschutzscheiben mit einer kleinen Höhe, einer großen Breite und zudem einer großen Krümmung, quer zur Längsrichtung des Kraftfahrzeugs im äußeren seitlichen Bereich, wie beispielsweise bei einem Roadster, die Wischqualität insbesondere auf der Beifahrerseite ab. Das Wischblatt für die Beifahrerseite einer Gleichlaufwischanlage kommt mit seinem freien Ende in diesem Bereich während der Wischbewegung nur mit einem relativ flachen Winkel zum Liegen bzw. überstreicht den äußeren seitlichen Bereich der Windschutzscheibe in einer weitgehend waagerechten Stellung. Je flacher der Winkel ist, um so mehr müßte das Wischblatt verformt werden, um der Krümmung der Windschutzscheibe quer zur Längsrichtung des Kraftfahrzeugs angepaßt zu werden. Ein gleichmäßiger Anpreßdruck kann nicht oder nur schwer erreicht werden. Die Wischqualität nimmt ab.

Bei Gegenlaufwischanlagen besitzen die Wischarme bzw. Wischblätter im äußeren seitlichen Bereich während der Wischbewegung einen steilen Winkel bzw. sind bei der Schwenkbewegung in diesem Bereich weitgehend in Fahrzeuglängsrichtung ausgerichtet. Durch das Kniegelenk im Wischarm zwischen dem Befestigungsteil und dem Gelenkteil kann das Wischblatt senkrecht zur Windschutzscheibe entlang der Krümmung geführt werden. Das Wischblatt muß dabei nur geringfügig verformt werden. Die Wischqualität ist in beiden äußeren Bereichen gut, jedoch bleibt im mittleren Bereich der Windschutzscheibe ein größerer Teil ungewischt.

### Vorteile der Erfindung

Bei der erfindungsgemäßen Wischanlage nach Anspruch 1 ist eine Gegenlaufwischanlage mit einer Gleichlaufwischanlage kombiniert. Ein dritter Wischarm mit einem Wischblatt für einen mittleren Bereich der Windschutzscheibe ist auf einer Antriebswelle befestigt, die zwischen den Antriebswellen des Wischarms für die Fahrerseite und für die Beifahrerseite angeordnet ist. Die Vorteile von beiden Wischanlagen können genutzt werden. Die beiden äußeren, sich in entgegengesetzter Schwenkrichtung bewegenden Wischarme und daran befestigte Wischblätter besitzen im äußeren seitlichen Bereich der Windschutzscheibe in ihrer Schwenkbewegung einen steilen Winkel. Die Wischblätter können durch das Kniegelenk senkrecht zur Windschutzscheibe entlang einer starken Krümmung quer zur Längsrichtung geführt werden und es kann auf der Beifahrerseite und auf der Fahrerseite im seitlich äußeren Bereich eine gute Wischqualität erzielt werden. Der dritte mittlere Scheibenwischer vergrößert im mittleren Bereich der Windschutzscheibe gegenüber einer reinen Gegenlaufwischanlage das Wischfeld. Die Sicht und Fahrsicherheit wird verbessert.

Bekannte Regensensoren sind an der Windschutzscheibe befestigt und reagieren auf unterschiedliche Brechungsindexe. Befindet sich Wasser auf der Windschutzscheibe, entsteht ein großer Brechungsindex und der Sensor erkennt, daß es regnet. Um zu erkennen, wie stark es regnet und ob es aufgehört hat zu regnen, muß der Sensor im Wischfeld angeordnet werden. Sobald der Bereich gewischt ist, in dem der Sensor angeordnet ist, wird erfaßt, wie schnell sich der Brechungsindex verändert, woraus abgeleitet werden kann, wie stark es regnet und wie schnell die Wischanlage betätigt werden muß. Liegt der Sensor nicht im Wischfeld, ändert sich der Brechungsindex nur zu Beginn des Regens und ansonsten nicht oder nur sehr langsam. Besonders vorteilhaft wird der Regensensor im Bereich eines Innenspiegels angebracht. Das Sichtfeld wird nicht beeinträchtigt, Bauteile können im Innenspiegel verdeckt angebracht werden und Veränderungen beim Niederschlag können schnell und sicher erfaßt werden. Die erfindungsgemäße Wischanlage kann vorteilhaft so ausgelegt werden, daß der Bereich des Innenspiegels, d.h. der obere mittlere Bereich der Windschutzscheibe im Wischfeld liegt, und zwar im Wischfeld des dritten Wischarms, wodurch der Regensensor in diesem Bereich angebracht werden kann.

In einer Ausgestaltung der Erfindung wird vorgeschlagen, die Antriebswelle des dritten Wischarms in einem zur Umkehr der Schwenkrichtung an der Platine befestigten Umlenklager zu lagern. Zusätzliche Bauteile, Gewicht, Montageaufwand und Kosten werden reduziert.

Die erfindungsgemäße Wischanlage kann aufgrund der guten Abdeckung der Windschutzscheibe vom Wischfeld und der guten Wischqualität in beiden äußeren seitlichen Bereichen für Fahrzeuge verwendet werden, die an Länder mit Linksverkehr und an Länder mit Rechtsverkehr ausgeliefert werden, sogenannte Linkslenker-Kraftfahrzeuge und Rechtslenker-Kraftfahrzeuge.

Bei einem möglichst großen Wischfeld, sind die Wischblätter jedoch so groß, daß diese im unteren Bereich der Windschutzscheibe in der Parkstellung nicht mehr nebeneinander sondern zumindest teilweise übereinander angeordnet werden müssen. Die Umfangsgeschwindigkeit des Scheibenwischers nimmt mit dem Abstand von der Antriebswelle zum freien Ende hin zu. Der untere Scheibenwischer liegt meist mit seinem freien Ende näher bei der Antriebswelle des oberen Scheibenwischers als bei seiner Antriebswelle. Würden beide Scheibenwischer mit der gleichen Winkelgeschwindigkeit betrieben, würde der untere Scheibenwischer mit dem freien Ende, das eine hohe Umfangsgeschwindigkeit aufweist, mit einem Teil des oberen Scheibenwischers kollidieren, der nahe an der Antriebswelle liegt und eine kleine Umfangsgeschwindigkeit aufweist. Um dies zu vermeiden, wird der untere Scheibenwischer zu Beginn der Wischbewegung aus der Parkstellung verzögert bewegt. Damit die Scheibenwischer nach der Umkehrlage wieder in ihre Ausgangslage in der Parkstellung zurückkehren, d.h. der obere Scheibenwischer wieder oben und der untere Scheibenwischer wieder unten zum Liegen kommt, wird der untere Scheibenwischer zur Umkehrlage und von der Umkehrlage beschleunigt bewegt. Ferner liegt in der Regel die Umkehrlage des unteren Scheibenwischers weiter vom Rand der Windschutzscheibe entfernt als die Umkehrlage des oberen Scheibenwischers.

Die Beschleunigung des Scheibenwischers zur und von der Umkehrlage und der weitere Abstand zum Rand der Windschutzscheibe führen auf der betreffenden Seite zu einem kleineren Wischfeld und einer schlechteren Wischqualität. Daher liegt vorzugsweise in der Parkstellung der für die Fahrerseite vorgesehene Scheibenwischer bzw. das vorgesehene Wischblatt über dem für die Beifahrerseite. Um mit dem dritten Wischarm bzw. mit dem Wischblatt den gewünschten mittleren oberen Bereich der Windschutzscheibe abzudecken, wird vorteilhaft ein langer Wischarm und ein kurzes Wischblatt verwendet. Der Wischarm ist im Vergleich zum Wischblatt kostengünstiger und leichter. Mit einem langen Wischarm wird am Wischblatt eine hohe Umfangsgeschwindigkeit erreicht. Der dritte Wischarm schwenkt vorteilhaft aus der Parkstellung in Richtung Umkehrlage des Wischarms für die Fahrerseite und ragt in der Parkstellung weiter in Wischrichtung als der Wischarm für die Beifahrerseite. Das Wischblatt des dritten Wischarms liegt über dem Wischblatt für die Beifahrerseite, besitzt jedoch aufgrund des langen Wischarms eine hohe Umfangsgeschwindigkeit, so daß der Wischarm für die Beifahrerseite nicht oder nur geringfügig verzögert werden muß, um eine Kollision mit dem dritten Wischarm zu vermeiden.

Wird eine für ein Linkslenker-Kraftfahrzeug konzipierte Wischanlage bei einem Rechtslenker-Kraftfahrzeug verwendet, ist beim Rechtslenker-Kraftfahrzeug auf der Fahrerseite das Wischfeld kleiner und die Wischqualität schlechter als beim Linkslenker-Kraftfahrzeug. Wird die Wischanlage bei einem Rechtslenker-Kraftfahrzeug insgesamt spiegelsymmetrisch zu der Wischanlage eines Rechtslenker-Kraftfahrzeugs ausgeführt, ist zwar jeweils auf der Fahrerseite das Wischfeld gleich groß und die Wischqualität gleich gut, jedoch steigt die Bauteilevielfalt nahezu um das Doppelte an.

In einer Ausgestaltung der Erfindung wird vorgeschlagen, die Platine in der Art auszuführen, daß im Bereich des Umlenklagers der Platine der Wischantrieb und im Bereich des Wischerantriebs das Umlenklager montierbar ist und die Platine für eine Rechtslenkerausführung und für eine Linkslenkerausführung verwendbar ist. Beispielsweise ist die Platine im Bereich des Umlenklagers gleich ausgeführt wie im Bereich des Wischerantriebs, so daß ohne Veränderung am Umlenklager und am Wischerantrieb, diese vertauscht montiert werden können. Wird die Platine anstatt für eine Linkslenkerausführung für eine Rechtslenkerausführung verwendet, können das Umlenklager und der Wischerantrieb vertauscht angebracht werden, ohne daß eine neue Platine hergestellt werden muß. Die Bauteilevielfalt und die Kosten werden reduziert. Um ein spiegelbildliches Wischfeld zu erreichen, wird vorteilhaft der Wischarm für die Fahrerseite bei der Rechtslenkerausführung spiegelsymmetrisch zum Wischarm für die Fahrerseite bei der Linkslenkerausführung und der Wischarm für die Beifahrerseite bei der Rechtslenkerausführung spiegelsymmetrisch zum Wischarm für die Beifahrerseite bei der Linkslenkerausführung ausgeführt. Ferner ist der dritte Wischarm bei der Rechtslenkerausführung spiegelsymmetrisch zum dritten Wischarm bei der Linkslenkerausführung. Um ein Kollidieren der Scheibenwischer zu vermeiden, müssen die Kurbeln und das Gestänge jeweils auf die Rechtslenkerausführung bzw. auf die Linkslenkerausführung entsprechend angepaßt werden.

Ferner können vorteilhaft die Öffnungen für die Antriebswellen des Wischarms für die Beifahrerseite und für die Fahrerseite und zumindest teilweise Befestigungsstellen für die Platine der Rechtslenkerausführung und der Linkslenkerausführung an gleichen Stellen der Kraftfahrzeugkarosserie angeordnet werden. Eine Öffnung für die im Umlenklager gelagerte Antriebswelle kann jeweils entsprechend der einzubauenden Ausführung in die Kraftfahrzeugkarosserie eingebracht werden oder es können stets für beide Ausführungen die Öffnungen eingebracht sein. Die Montage der Platine an der Kraftfahrzeugkarosserie bei der Linkslenkerausführung und bei der Rechtslenkerausführung ist nahezu identisch und kann einfach in einer Montagestation durchgeführt werden, ohne daß Werkzeuge umgestellt werden müssen. Der Montage- und Fertigungsaufwand des Kraftfahrzeugs wird reduziert und Kosten gespart.

Besonders vorteilhaft ist ferner das Befestigungsteil für die Fahrerseite bei der Rechtslenkerausführung gleich dem Befestigungsteil für die Beifahrerseite der Linkslenkerausführung und das Befestigungsteil für die Beifahrerseite bei der Rechtslenkerausführung gleich dem Befestigungsteil für die Fahrerseite der Linkslenkerausführung ausgeführt. Die Bauteilevielfalt wird reduziert und die Stückzahl gleicher Bauteile erhöht. Das Befestigungsteil ist in der Regel aus Aluminium, Zinkdruckguß oder Kunststoff in einem Druckgußverfahren bzw. Spritzgußverfahren hergestellt und in seinem Kopf- und Konusbereich weitgehend massiv ausgeführt. Für die Rechtslenkerausführung und die Linkslenkerausführung können die gleichen Gußformen und Werkzeuge verwendet werden.

Die Gelenkteile sind in der Regel Stanz-Biegeteile mit einem zur Scheibe hin offenen u-förmigen Profil. Die Stanz- und Biegewerkzeuge können verstellbar ausgeführt werden, so daß die Gelenkteile der drei Wischarme mit einem Werkzeug entsprechend für die Linkslenkerausführung und für die Rechtslenkerausführung angepaßt und hergestellt werden können. Vorteilhaft ist jedoch das Gelenkteil für die Fahrerseite bei der Rechtslenkerausführung gleich dem Gelenkteil für die Beifahrerseite der Linkslenkerausführung und das Gelenkteil für die Beifahrerseite bei der Rechtslenkerausführung gleich dem Gelenkteil für die Fahrerseite bei der Linkslenkerausführung. Der Wischarm für die Fahrerseite bei der Rechtslenkerausführung unterscheidet sich nur in der Wischstange zu dem Wischarm für die Beifahrerseite bei der Linkslenkerausführung. Das Gleiche gilt bei dem Wischarm für die Beifahrerseite bei der Rechtslenkerausführung zu dem Wischarm für die Fahrerseite bei der Linkslenkerausführung. Die Wischstange wird in der Regel aus einem massiven Material von einem verstellbaren Werkzeug hergestellt, mit dem sowohl Wischstangen für die Beifahrerseite und für die Fahrerseite als auch Wischstangen für eine Linkslenkerausführung und für eine Rechtslenkerausführung hergestellt werden können. Die Wischarme für die Rechtslenkerausführung und für die Linkslenkerausführung können mit den gleichen Werkzeugen hergestellt werden. Ferner muß nur das Werkzeug für die Wischstange umstellbar ausgeführt und bei der Herstellung der Wischarme entsprechend umgestellt werden. Möglich ist auch, das Gelenkteil und die Wischstange einstückig auszuführen.

In einer weiteren Ausgestaltung der Erfindung wird vorgeschlagen, das Befestigungsteil und/oder das Gelenkteil der drei Wischarme gleich auszuführen, und zwar bei der Linkslenkerausführung und bei der Rechtslenkerausführung. Die unterschiedliche Gestalt der Wischarme wird vorteilhaft allein durch die Wischstangen erreicht, die kostengünstig in einem verstellbaren Werkzeug hergestellt werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischanlage als Linkslenkerausführung,
- Fig. 2: eine Wischanlage als Rechtslenkerausführung,
- Fig. 3: einen Ausschnitt einer Wischanlage nach Fig. 1 im Schnitt und
- Fig. 4: einen Ausschnitt einer Wischanlage nach Fig. 2 im Schnitt.

### Beschreibung der Ausführungsbeispiele

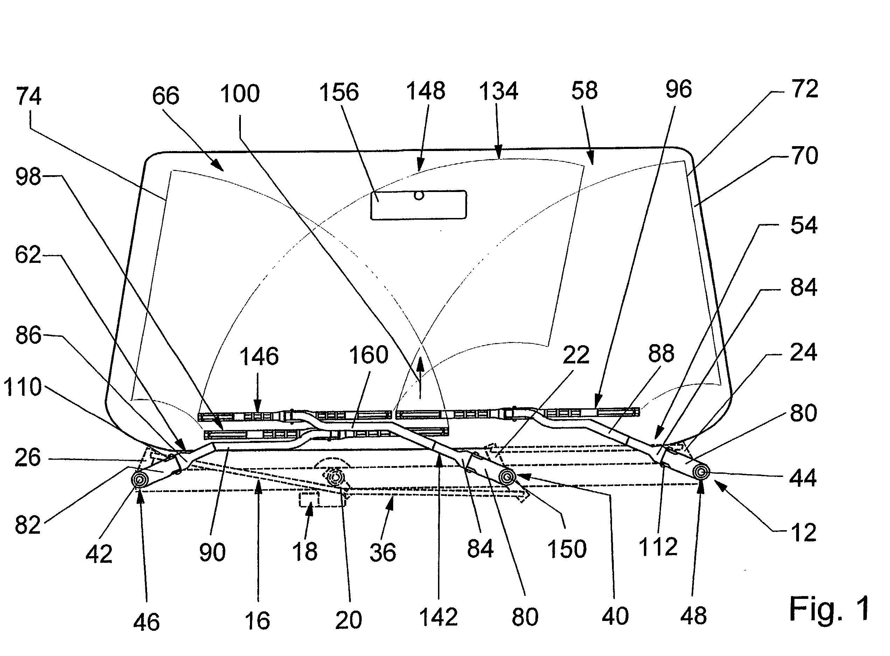

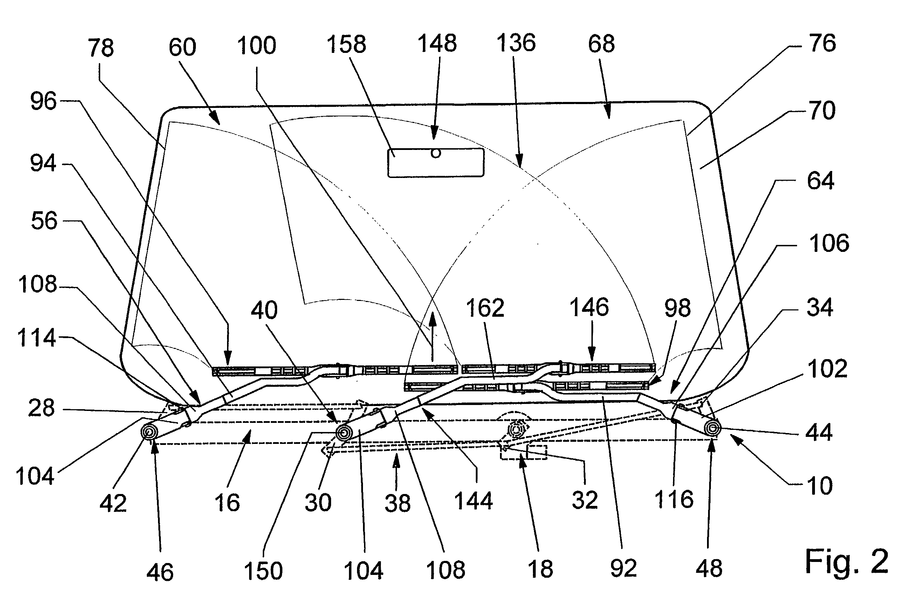

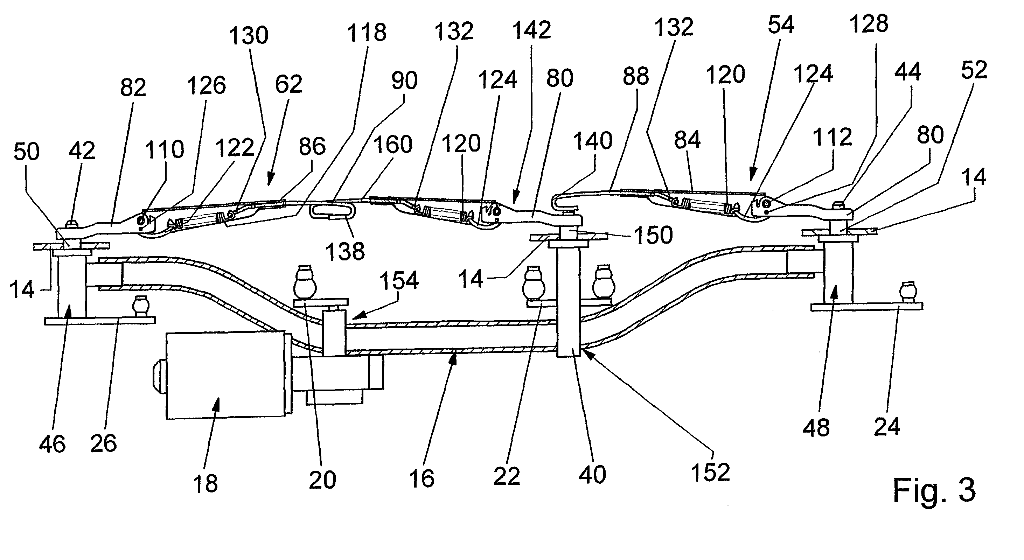

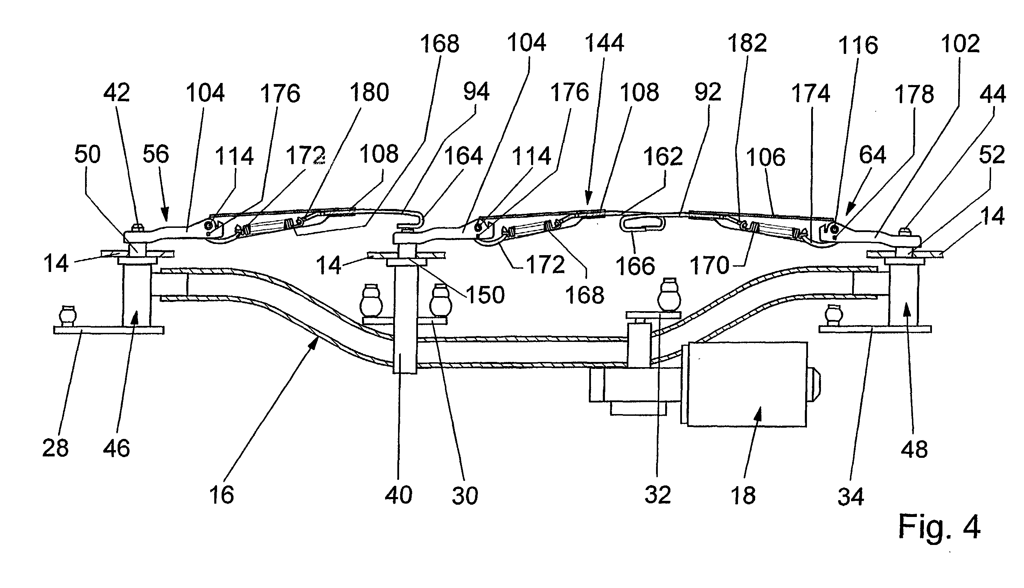

Fig. 1 und 2 zeigt eine Wischanlage mit einer Linkslenkerausführung 12 (Fig. 1) und einer Rechtslenkerausführung 10 (Fig. 2), die an einer Kraftfahrzeugkarosserie 14 über eine Rohrplatine 16 befestigt sind (Fig. 3 und 4). An der Rohrplatine 16 ist ein Wischerantrieb 18 befestigt, der über Kurbeln 20, 22, 24, 26, 28, 30, 32, 34 und ein Gestänge 36, 38 zwei Antriebswellen 42, 44 in entgegengesetzter Schwenkrichtung antreibt, wobei zwischen dem Wischarm 54, 56 für die Fahrerseite 58, 60 und dem Wischerantrieb 18 ein Umlenklager 40 zur Umkehr der Schwenkrichtung zwischengeschaltet ist. Die Antriebswellen 42, 44 sind in an der Rohrplatine 16 befestigen Wischerlagern 46, 48 gelagert, ragen im äußeren seitlichen Bereich einer Windschutzscheibe 70 aus Öffnungen 50, 52 in der Fahrzeugkarosserie 14 und bewegen einen Wischarm 54, 56 für eine Fahrerseite 58, 60 und einen Wischarm 62, 64 für eine Beifahrerseite 66, 68 von einer Parkstellung auf der Windschutzscheibe 70 jeweils nach außen zu einer Umkehrlage 72, 74, 76, 78 und wieder zurück (Fig. 1 und 2). Der Wischarm 54, 56, 62, 64 ist mit einem Befestigungsteil 80, 82, 102, 104 auf der Antriebswelle 42, 44 befestigt, das mit einem Gelenkteil 84, 86, 106, 108 und sich an das Gelenkteil 84, 86, 106, 108 starr anschließenden Wischstange 88, 90, 92, 94 gelenkig über ein Kniegelenk 110, 112, 114, 116 verbunden ist. In die Wischstange 88, 90, 92, 94 ist in ein hakenförmiges Ende 138, 140, 164, 166 ein Wischblatt 96, 98 eingehängt (Fig. 3 und 4). Ein erforderlicher Anpreßdruck des Wischblatts 96, 98 auf der Kraftfahrzeugscheibe 70 wird mit einer Zugfeder 118, 120, 168, 170 erreicht. Die Zugfeder 118, 120, 168, 170 ist über einen C-förmigen Bügel 122, 124, 172, 174 in einem Stift 126, 128, 176, 178 im Befestigungsteil 80, 82, 102, 104 und in einer Öffnung 130, 132, 180, 182 in der Wischstange 88, 90, 92, 94 eingehängt und verspannt das Gelenkteil 84, 86, 106, 108 gemeinsam mit der Wischstange 88, 90, 92, 94 über das Kniegelenk 110, 112, 114, 116.

Erfindungsgemäß ist ein dritter Wischarm 142, 144 mit einem Wischblatt 146 für einen mittleren Bereich 148 der Windschutzscheibe 70 auf einer Antriebswelle 150 befestigt, die zwischen den Antriebswellen 42, 44 des Wischarms 54, 56 für die Fahrerseite 58, 60 und des Wischarms 62, 64 für die Beifahrerseite 66, 68 angeordnet ist.

Die beiden äußeren, sich in entgegengesetzter Schwenkrichtung bewegenden Wischarme 54, 62 bzw. 56, 64 besitzen im äußeren seitlichen Bereich der Windschutzscheibe 70 in ihrer Schwenkbewegung einen steilen Winkel bzw. sind im Bereich der Umkehrlagen 72, 74, 76, 78 nahezu in Fahrzeuglängsrichtung ausgerichtet. Durch das Kniegelenk 110, 112, 114, 116 im Wischarm 54, 56, 62, 64 kann das Wischblatt 96, 98 senkrecht zur Windschutzscheibe 70 entlang der Krümmung quer zur Fahrzeuglängsrichtung geführt werden. Auf der Beifahrerseite 66, 68 und auf der Fahrerseite 58, 60 im seitlich äußeren Bereich wird eine gute Wischqualität erzielt. Der dritte mittlere Wischarm 142, 144 mit dem Wischblatt 146 vergrößert im mittleren Bereich 148 der Windschutzscheibe 70 gegenüber einer reinen Gegenlaufwischanlage das Wischfeld 134, 136. Die Sicht und Fahrsicherheit wird verbessert. Im oberen mittleren Bereich der Windschutzscheibe 70 ist ein Innenspiegel 156, 158 befestigt. Der Bereich liegt im Wischfeld 134, 136, insbesondere des dritten Wischblatts 146, so daß vorteilhaft verdeckt im Innenspiegel 156, 158 ein Regensensor befestigt werden kann.

Die Antriebswelle 150 des dritten Wischarms 142, 144 ist im Umlenklager 40 gelagert, wodurch zusätzliche Bauteile gespart werden können.

Um möglichst auf der Fahrerseite 58, 60 ein großes Wischfeld 134, 136 mit einer guten Wischqualität zu erreichen, ragt der Wischarm 54, 56 für die Fahrerseite 58, 60 in der Parkstellung weiter in Wischrichtung 100 als der Wischarm 62, 64 für die Beifahrerseite 66, 68. Um mit dem dritten Wischarm 142, 144 bzw. mit dem Wischblatt 146 den gewünschten mittleren oberen Bereich 148 der Windschutzscheibe 70 abzudecken, wird vorteilhaft ein langer Wischarm 142, 144 und ein kurzes Wischblatt 146 verwendet. Der Wischarm 142, 144 ist im Vergleich zum Wischblatt 146 kostengünstiger und leichter. Mit einem langen Wischarm 142, 144 wird am Wischblatt 146 eine hohe Umfangsgeschwindigkeit erreicht. Der dritte Wischarm 142, 144 schwenkt vorteilhaft aus der Parkstellung in Richtung Umkehrlage 72, 78 des Wischarms 54, 56 für die Fahrerseite 58, 60 und ragt in der Parkstellung weiter in Wischrichtung 100 als der Wischarm 62, 64 für die Beifahrerseite 66, 68. Das Wischblatt 146 des dritten Wischarms 142, 144 liegt über dem Wischblatt 98 für die Beifahrerseite 66, 68, besitzt jedoch aufgrund des langen Wischarms 142, 144 eine hohe Umfangsgeschwindigkeit, so daß der Wischarm 62, 64 für die Beifahrerseite 66, 68 nicht oder nur geringfügig verzögert werden muß, um eine Kollision mit dem dritten Wischarm 142, 144 zu vermeiden.

Erfindungsgemäß sind das Befestigungsteil 104 und das Gelenkteil 108 für die Fahrerseite 60 bei der Rechtslenkerausführung 10 gleich dem Befestigungsteil 82 bzw. dem Gelenkteil 86 für die Beifahrerseite 66 der Linkslenkerausführung 12 und das Befestigungsteil 102 und das Gelenkteil 106 für die Beifahrerseite 68 bei der Rechtslenkerausführung 10 sind gleich dem Befestigungsteil 80 bzw. Gelenkteil 84 für die Fahrerseite 58 der Linkslenkerausführung 12 ausgeführt. Ferner sind die Rohrplatine 16, die Wischerlager 46, 48 und die Antriebswellen 42, 44 bei der Rechtslenkerausführung 10 und der Linkslenkerausführung 12 gleich und sind kostengünstig mit gleichen Werkzeugen hergestellt. Die Öffnungen 50, 52 für die Antriebswellen 42, 44 des Wischarms 54, 56, 62, 64 für die Beifahrerseite 66, 68 und für die Fahrerseite 58, 60 und Befestigungsstellen für die Rohrplatine 16 sind bei der Rechtslenkerausführung 10 und bei der Linkslenkerausführung 12 an gleichen Stellen der Kraftfahrzeugkarosserie 14 angeordnet.

Im Bereich 152 des Umlenklagers 40 der Platine 16 ist der Wischerantrieb 18 und im Bereich 154 des Wischerantriebs 18 der Platine 16 ist das Umlenklager 40 montierbar (Fig. 3). Die Platine 16 ist in beiden Bereichen 152, 154 gleich ausgeführt, so daß das Umlenklager 40 und der Wischantrieb 18 einfach vertauscht montierbar sind und die Platine 16 für die Rechtslenkerausführung 10 und für die Linkslenkerausführung 12 verwendbar ist (Fig. 3 und 4).

Der dritte Wischarm 142, 144 ist bei der jeweiligen Ausführung 10, 12 bis auf eine Wischstange 160, 162 identisch mit dem Wischarm 54, 56 für die Fahrerseite 58, 60. Gleiche Bauteile sind mit den gleichen Bezugszeichen beziffert. Der dritte Wischarm 144 bei der Rechtslenkerausführung 10 ist spiegelsymmetrisch zum dritten Wischarm 142 bei der Linkslenkerausführung 12.

Die Rechtslenkerausführung 10 und die Linkslenkerausführung 12 unterscheiden sich in den Wischstangen 88, 90, 92, 94, 160, 162, den Kurbeln 20, 22, 24, 26, 28, 30, 32, 34, in den Gestängen 36, 38 und in der Anordnung des Wischerantriebs 18 und des Umlenklagers 40. Die Wischstange 88, 94 für die Fahrerseite 58, 60 und die Wischstange 160, 162 für den dritten Wischarm 142, 144 ragen in der Parkstellung weiter in Wischrichtung 100 als die Wischstange 90, 92 für die Beifahrerseite 66, 68. Das Wischblatt 96 für die Fahrerseite 58 und das Wischblatt 146 des dritten Wischarms 142, 144 liegen in der Parkstellung über dem Wischblatt 98 für die Beifahrerseite 66, 68. Die Wischstange 94 für die Fahrerseite 60 bei der Rechtslenkerausführung 10 ist spiegelsymmetrisch zur Wischstange 88 für die Fahrerseite 58 bei der Linkslenkerausführung 12 und die Wischstange 92 für die Beifahrerseite 68 bei der Rechtslenkerausführung 10 ist spiegelsymmetrisch zur Wischstange 90 für die Beifahrerseite 66 bei der Linkslenkerausführung 12 ausgeführt. Ferner ist die Wischstange 162 des dritten Wischarms 144 für die Rechtslenkerausführung 10 spiegelsymmetrisch zur Wischstange 160 der Linkslenkerausführung 12. Um ein Kollidieren der Scheibenwischer zu vermeiden, sind die Kurbeln 20, 22, 24, 26, 28, 30, 32, 34 und Gestänge 36, 38 entsprechend der Rechtslenkerausführung 10 oder der Linkslenkerausführung 12 angepaßt. Die Kurbeln 20, 22, 26, 30, 32, 34 sind in der Parkstellung so angeordnet, daß der Wischarm 62, 64 für die Beifahrerseite 66, 68 aus der Parkstellung heraus verzögert und im Bereich der Umkehrlage 74, 76 beschleunigt bewegt wird.

Bei der Rechtslenkerausführung 10 und bei der Linkslenkerausführung 12 entstehen spiegelsymmetrische Wischfelder 134, 136. Auf der Fahrerseite 58, 60 kann bei der Linkslenkerausführung 12 und bei der Rechtslenkerausführung 10 jeweils eine optimale Größe und Qualität des Wischfelds 134, 136 erreicht werden.

Die Wischstangen 88, 90, 92, 94, 160, 162, die Kurbeln 20, 22, 24, 26, 28, 30, 32, 34 und die Gestänge 36, 38 sind aus einem massiven Material von verstellbaren Werkzeugen hergestellt, mit denen sowohl Wischstangen 88, 90, 92, 94, 160, 162, Kurbeln 20, 22, 24, 26, 28, 30, 32, 34 und Gestänge 36, 38 für eine Linkslenkerausführung 12 als auch für eine Rechtslenkerausführung 10 hergestellt werden können.

Die Befestigungsteile und/oder Gelenkteile können in radialer Richtung, ausgehend von der Antriebswelle 42, 44, 150 jeweils in Richtung Wischblatt 96, 98, 146 gekröpft sein. Um die Bauteilevielfalt weiter zu reduzieren, ist das Befestigungsteil 80, 82, 102, 104 und das Gelenkteil 84, 86, 106, 108 bei allen drei Wischarmen 54, 56, 62, 64, 142, 144 gleich, und zwar bei der Rechtslenkerausführung 10 und bei der Linkslenkerausführung 12. Die Befestigungsteile 80, 82, 102, 104 und Gelenkteile 84, 86, 106, 108 sind in radialer Richtung, ausgehend von den Antriebswelle 42, 44, 150, gerade ausgeführt. Es muß nur eine Art von Befestigungsteil 80, 82, 102, 104 und eine Art von Gelenkteil 84, 86, 106, 108 hergestellt werden, die bei beiden Ausführungen 10, 12 verwendet werden können. Ferner ist das Wischblatt 96 für die Fahrerseite 58, 60 gleich dem Wischblatt 98 für die Beifahrerseite 66, 68 und das Wischblatt 146 des dritten Wischarms 142 der Linkslenkerausführung 12 ist gleich dem Wischblatt 146 des dritten Wischarms 144 der Rechtslenkerausführung 10.

## Patentansprüche

1. Wischanlage für ein Kraftfahrzeug, die mit einer Platine ) (16) an einer Kraftfahrzeugkarosserie (14) befestigt ist, und an der ein Wischerantrieb (18) angeordnet ist, der vorzugsweise über Kurbeln (20, 22, 24, 26, 28, 30, 32, 34) und ein Gestänge (36, 38) zwei Antriebswellen (42, 44) in entgegengesetzter Schwenkrichtung antreibt, die in insbesondere an der Platine (16) befestigten Wischerlagern (46, 48) gelagert sind, im äußeren seitlichen Bereich einer Windschutzscheibe (70) angeordnet sind und einen Wischarm (54, 56) für eine Fahrerseite (58, 60) und einen Wischarm (62, 64) für eine Beifahrerseite (66, 68) mit je einem Wischblatt (96, 98) von einer Park- oder unteren Umkehrlage auf der Windschutzscheibe (70) jeweils nach außen zu einer oberen Umkehrlage (72, 74, 76, 78) und wieder zurück schwenken, wobei ein dritter Wischarm (142, 144) mit einem Wischblatt (146) für einen mittleren Bereich (148) der Windschutzscheibe (70) auf einer Antriebswelle (150) befestigt ist, die zwischen den Antriebswellen (42, 44) des Wischarms (54, 56) für die Fahrerseite (58, 60) und des Wischarms (62, 64) für die Beifahrerseite (66, 68) angeordnet ist, **dadurch gekennzeichnet, daß** die Antriebswelle (150) des dritten Wischarms (142, 144) in einem zur Umkehr der Schwenkrichtung an der Platine (16) befestigten Umlenklager (40) gelagert ist.

2. Wischanlage nach Anspruch 1, **dadurch gekennzeichnet, daß** der Wischarm (54, 56, 62, 64) mit einem Befestigungsteil (80, 82, 102, 104) mit der Antriebswelle (42, 44) verbunden ist, das mit einem Gelenkteil (84, 86, 106, 108) und sich an das Gelenkteil (84, 86, 106, 108) starr anschließenden Wischstange (88, 90, 92, 94) gelenkig verbunden ist, in die das Wischblatt (96, 98) eingehängt ist.

3. Wischanlage nach einem der vorhergehenden Ansprüche, **dadurch gekennzeichnet, daß** der dritte Wischarm (142, 144) aus der Park- oder unteren Umkehrstellung in Richtung obere Umkehrlage (72, 78) des Wischarms (54, 56) für die Fahrerseite (58, 60) schwenkt und der dritte Wischarm (142, 144) und der Wischarm (54, 56) für die Fahrerseite (58, 60) in der Parkoder unteren Umkehrlage weiter in Wischrichtung (100) ragen als der Wischarm (62, 64) für die Beifahrerseite (66, 68).

4. Wischanlage nach Anspruch 3, **dadurch gekennzeichnet, daß** der Wischarm (56) für die Fahrerseite (60) bei einer Rechtslenkerausführung (10) spiegelsymmetrisch ist zum Wischarm (54) für die Fahrerseite (58) bei einer Linkslenkerausführung (12) und der Wischarm (64) für die Beifahrerseite (68) bei der Rechtslenkerausführung (10) spiegelsymmetrisch ist zum Wischarm (62) für die Beifahrerseite (66) bei der Linkslenkerausführung (12), daß der dritte Wischarm (144) bei der Rechtslenkerausführung (10) spiegelsymmetrisch ist zum dritten Wischarm (142) bei der Linkslenkerausführung (12) und im Bereich (152) des Umlenklagers (40) der Platine (16) der Wischerantrieb (18) und im Bereich (154) des Wischerantriebs (18) der Platine (16) das Umlenklager (40) montierbar und die Platine (16) für die Rechtslenkerausführung (10) und für die Linkslenkerausführung (12) verwendbar ist.

5. Wischanlage nach Anspruch 4, **dadurch gekennzeichnet, daß** die Öffnungen (50, 52) für die Antriebswellen (42, 44) des Wischarms (54, 56, 62, 64) für die Beifahrerseite (66, 68) und für die Fahrerseite (58, 60) bei der Rechtslenkerausführung (10) und der Linkslenkerausführung (12) an gleichen Stellen der Kraftfahrzeugkarosserie (14) angeordnet sind.

6. Wischanlage nach Anspruch 4 oder 5, **dadurch gekennzeichnet, daß** das Befestigungsteil (104) für die Fahrerseite (60) bei der Rechtslenkerausführung (10) gleich dem Befestigungsteil (82) für die Beifahrerseite (66) der Linkslenkerausführung (12) und das Befestigungsteil (102) für die Beifahrerseite (68) bei der Rechtslenkerausführung (10) gleich dem Befestigungsteil (80) für die Fahrerseite (58) der Linkslenkerausführung (12) ist.

7. Wischanlage nach einem der Ansprüche 4 bis 6, **dadurch gekennzeichnet, daß** das Gelenkteil (108) für die Fahrerseite (60) bei der Rechtslenkerausführung (10) gleich dem Gelenkteil (86) für die Beifahrerseite (66) der Linkslenkerausführung (12) und das Gelenkteil (106) für die Beifahrerseite (68) bei der Rechtslenkerausführung (10) gleich dem Gelenkteil (84) für die Fahrerseite (58) der Linkslenkerausführung (12) ist und die Wischstange (88, 94) jeweils für die Fahrerseite (58, 60) in der Parkstellung weiter in Wischrichtung (100) ragt als die Wischstange (90, 92) für die Beifahrerseite (66, 68).

8. Wischanlage nach einem der vorhergehenden Ansprüche, **dadurch gekennzeichnet, daß** das Befestigungsteil (80, 82, 102, 104) bei allen drei Wischarmen (54, 56, 62, 64, 142, 144) gleich ist.

9. Wischanlage nach einem der vorhergehenden Ansprüche, **dadurch gekennzeichnet, daß** das Gelenkteil (84, 86, 106, 108) bei allen drei Wischarmen (54, 56, 62, 64, 142, 144) gleich ist.

## Claims

1. Wiper system for a motor vehicle, which is fastened by a mounting plate (16) to a motor-vehicle body (14) and on which is arranged a wiper drive (18) which, preferably via cranks (20, 22, 24, 26, 28, 30, 32, 34) and a linkage (36, 38), drives two drive shafts (42, 44) in an opposed pivoting direction, the said drive shafts being mounted in wiper bearings (46, 48), which are fastened in particular to the mounting plate (16), being arranged in the outer lateral region of a windscreen (70) and pivoting a wiper arm (54, 56) for a driver's side (58, 60) and a wiper arm (62, 64) for a front passenger's side (66, 68), each having a wiper blade (96, 98), from a parking or lower reversal position on the windscreen (70) outwards in each case to an upper reversal position (72, 74, 76, 78) and back again, a third wiper arm (142, 144) having a wiper blade (146) for a central region (148) of the windscreen (70) being fastened on a drive shaft (150) which is arranged between the drive shafts (42, 44) of the wiper arm (54, 56) for the driver's side (58, 60) and of the wiper arm (62, 64) for the front passenger's side (66, 68), **characterized in that** the drive shaft (150) of the third wiper arm (142, 144) is mounted in a deflecting bearing (40) which is fastened, for reversal of the pivoting direction, to the mounting plate (16).

2. Wiper system according to Claim 1, **characterized in that** the wiper arm (54, 56, 62, 64) is connected to the drive shaft (42, 44) by a fastening part (80, 82, 102, 104) which is connected in an articulated manner to an articulated part (84, 86, 106, 108) and the wiper rod (88, 90, 92, 94), which is joined rigidly to the articulated part (84, 86, 106, 108) and in which the wiper blade (96, 98) is fitted.

3. Wiper system according to one of the preceding claims, **characterized in that** the third wiper arm (142, 144) pivots from the parking or lower reversal position in the direction of the upper reversal position (72, 78) of the wiper arm (54, 56) for the driver's side (58, 60), and, in the parking or lower reversal position, the third wiper arm (142, 144) and the wiper arm (54, 56) for the driver's side (58, 60) protrude further in the wiping direction (100) than the wiper arm (62, 64) for the front passenger's side (66, 68).

4. Wiper system according to Claim 3, **characterized in that** the wiper arm (56) for the driver's side (60) in the case of a right-hand-drive design (10) is mirror-symmetrical to the wiper arm (54) for the driver's side (58) in a left-hand-drive design (12), and the wiper arm (64) for the front passenger's side (68) in the right-hand-drive design (10) is mirror-symmetrical to the wiper arm (62) for the front passenger's side (66) in the left-hand-drive design (12), **in that** the third wiper arm (144) in the right-hand-drive design (10) is mirror-symmetrical to the third wiper arm (142) in the left-hand drive design (12), and the wiper drive (18) can be fitted in the region (152) of the deflecting bearing (40) of the mounting plate (16), and the deflecting bearing (40) can be fitted in the region (154) of the wiper drive (18) of the mounting plate (16), and the mounting plate (16) can be used for the right-hand-drive design (10) and for the left-hand-drive design (12).

5. Wiper system according to Claim 4, **characterized in that** the openings (50, 52) for the drive shafts (42, 44) of the wiper arm (54, 56, 62, 64) for the front passenger's side (66, 68) and for the driver's side (58, 60) are arranged at the same points on the motor-vehicle body (14) for the right-hand-drive design (10) and the left-hand-drive design (12).

6. Wiper system according to Claim 4 or 5, **characterized in that** the fastening part (104) for the driver's side (60) in the right-hand-drive design (10) is identical to the fastening part (82) for the front passenger's side (66) of the left-hand-drive design (12), and the fastening part (102) for the front passenger's side (68) in the right-hand-drive design (10) is identical to the fastening part (80) for the driver's side (58) of the left-hand-drive design (12).

7. Wiper system according to one of Claims 4 to 6, **characterized in that** the articulated part (108) for the driver's side (60) in the right-hand-drive design (10) is identical to the articulated part (86) for the front passenger's side (66) of the left-hand-drive design (12), and the articulated part (106) for the front passenger's side (68) in the right-hand-drive design (10) is identical to the articulated part (84) for the driver's side (58) of the left-hand-drive design (12), and, in the parking position, the wiper rod (88, 94) in each case for the driver's side (58, 60) protrudes further in the wiping direction (100) than the wiper rod (90, 92) for the front passenger's side (66, 68).

8. Wiper system according to one of the preceding claims, **characterized in that** the fastening part (80, 82, 102, 104) is identical in all three wiper arms (54, 56, 62, 64, 142, 144).

9. Wiper system according to one of the preceding claims, **characterized in that** the articulated part (84, 86, 106, 108) is identical in all three wiper arms (54, 56, 62, 64, 142, 144).

## Revendications

1. Dispositif d'essuie-glace pour un véhicule automobile, qui est fixé à une carrosserie de véhicule automobile (14) par une platine (16) sur laquelle est disposé un entraînement d'essuie-glace (18), qui de préférence par des manivelles (20, 22, 24, 26, 28, 30, 32, 34) et une tringlerie (36, 38) entraîne dans des directions de pivotement opposées, deux arbres d'entraînement (42, 44) logés notamment dans des paliers d'essuie-glace (46, 48) fixés à la platine (16), disposés dans la zone latérale extérieure d'un pare-brise (70) et faisant pivoter, depuis une position de repos ou d'inversion inférieure sur le pare-brise (70), respectivement vers l'extérieur dans une position d'inversion supérieure (72, 74, 76, 78) et dans le sens inverse, un bras d'essuie-glace (54, 56) pour un côté conducteur (58, 60) et un bras d'essuie-glace (62, 64) pour un côté passager (66, 68) comportant respectivement un balai d'essuie-glace (96, 98), alors qu'un troisième bras d'essuie-glace (142, 144) avec un balai d'essuie-glace (146) pour une zone centrale (148) du pare-brise étant fixé sur un arbre d'entraînement (150), disposé entre les arbres d'entraînement (42, 44) du bras d'essuie-glace (54, 56) pour le côté conducteur (58, 60) et du bras d'essuie-glace (62, 64) pour le côté passager (66, 68),
**caractérisé en ce que**
l'arbre d'entraînement (150) du troisième bras d'essuie-glace (142, 144) est logé dans un palier de renvoi (40) fixé à la platine (16) pour inverser le sens de pivotement.

2. Dispositif d'essuie-glace selon la revendication 1,
**caractérisé en ce que**
le bras d'essuie-glace (54, 56, 62, 64) est relié à l'arbre d'entraînement (42, 44) par un élément de fixation (80, 82, 102, 104) qui, par un élément articulé (84, 86, 106, 108), est relié de manière articulée à une tige d'essuie-glace (88, 90, 92, 94) prolongeant rigidement l'élément articulé (84, 86, 106, 108), et à laquelle le balai d'essuie-glace (96, 98) est suspendu.

3. Dispositif d'essuie-glace selon l'une quelconque des revendications précédentes,
**caractérisé en ce que**
le troisième bras d'essuie-glace (142, 144) pivote depuis la position de repos ou d'inversion inférieure en direction de la position d'inversion supérieure (72, 78) du bras d'essuie-glace (54, 56) pour le côté conducteur (58, 60), et le troisième bras d'essuie-glace (142, 144)) ainsi que le bras d'essuie-glace (54, 56) pour le côté conducteur (58, 60), dans la position de repos ou d'inversion inférieure ressortent davantage dans la direction d'essuyage (100) que le bras d'essuie-glace (62, 64) pour le côté passager (66, 68).

4. Dispositif d'essuie-glace selon la revendication 3,
**caractérisé en ce que**
le bras d'essuie-glace (56) pour le côté conducteur (60), dans le cas d'une version avec conduite à droite (10), est symétrique par rapport au bras d'essuie-glace (54) pour le côté conducteur (60) pour une version avec conduite à gauche (12), et le bras d'essuie-glace (64) pour le côté passager (68), pour la version avec conduite à droite (10), est symétrique par rapport au bras d'essuie-glace (62) pour le côté passager (66) pour une version avec conduite à gauche (12), le troisième bras d'essuie-glace (144), pour la version avec conduite à droite (10), est symétrique par rapport au troisième bras d'essuie-glace (142) pour la version avec conduite à gauche (12), et l'entraînement d'essuie-glace (18) peut être monté dans la zone (152) du palier de renvoi (40) de la platine (16) et le palier de renvoi (40) peut être monté dans la zone (154) de l'entraînement d'essuie-glace (18) de la platine (16), et la platine (16) étant utilisable pour la version avec conduite à droite (10) et pour la version avec conduite à gauche (12).

5. Dispositif d'essuie-glace selon la revendication 4,
**caractérisé en ce que**
les ouvertures ( 50, 52) pour les arbres d'entraînement (42, 44) du bras d'essuie-glace (54, 56, 62, 64) pour le côté passager (66, 68) et pour le côté conducteur (58, 60) pour la version avec conduite à droite (10) et pour la version avec conduite à gauche (12) sont disposées aux mêmes endroits de la carrosserie du véhicule automobile (14).

6. Dispositif d'essuie-glace selon la revendication 4 ou 5,
**caractérisé en ce que**
l'élément de fixation (104) pour le côté conducteur (60) pour la version avec conduite à droite (10) est identique à l'élément de fixation (82) pour le côté passager (66) de la version avec conduite à gauche (12), et l'élément de fixation (102) pour le côté passager (68) pour la version avec conduite à droite (10) est identique à l'élément de fixation (80) pour le côté conducteur (58) de la version avec conduite à gauche (12).

7. Dispositif d'essuie-glace selon l'une quelconque des revendications 4 à 6,
**caractérisé en ce que**
l'élément articulé (108) pour le côté conducteur (60) pour la version avec conduite à droite (10) est identique à l'élément articulé (86) pour le côté passager (66) de la version avec conduite à gauche (12), et l'élément articulé (106) pour le côté passager (68) pour la version avec conduite à droite (10) est identique à l'élément articulé (84) pour le côté conducteur de la version avec conduite à gauche (12), et la tige d'essuie-glace (88, 94) pour le côté conducteur (58, 60), en position de repos, ressort davantage dans la direction d'essuyage (100) que la tige d'essuie-glace (90, 92) pour le côté passager (66, 68).

8. Dispositif d'essuie-glace selon l'une quelconque des revendications précédentes,
**caractérisé en ce que**
l'élément de fixation (80, 82, 102, 104) est identique pour les trois bras d'essuie-glace (54, 56, 62, 64, 142, 144).

9. Dispositif d'essuie-glace selon l'une quelconque des revendications précédentes,
**caractérisé en ce que**
l'élément articulé (84, 86, 106, 108) est identique pour les trois bras d'essuie-glace (54, 56, 62, 64, 142, 144).
